# EUROPEAN PATENT SPECIFICATION

(11) **EP 2 382 145 B1**
(45) Date of publication and mention of the grant of the patent: **07.06.2023**
(21) Application number: 10733923.6
(22) Date of filing: 22.01.2010
(51) Int. Cl.: B65G 47/24, B60L 13/03, B65G 54/02, B60L 13/04, B60L 13/00, B65G 35/06

(54) **IMPROVED TRANSPORT SYSTEM POWERED BY SHORT BLOCK LINEAR SYNCHRONOUS MOTORS AND SWITCHING MECHANISM**
DURCH LINEARE SYNCHRONMOTOREN MIT KURZEN BLÖCKEN ANGETRIEBENES VERBESSERTES TRANSPORTSYSTEM UND SCHALTMECHANISMUS DAFÜR
SYSTÈME DE TRANSPORT AMÉLIORÉ ENTRAÎNÉ PAR DES MOTEURS LINÉAIRES SYNCHRONES À BLOC COURT, ET MÉCANISME D'AIGUILLAGE

(30) Priority: 05.06.2009 US 184570 P; 23.01.2009 US 359022
(43) Date of publication of application: 02.11.2011
(73) Proprietor: Rockwell Automation, Inc., Mayfield Hts, OH 44124 (US)
(72) Inventor: KING, Nathanael, N., Ayer, MA 01432 (US); PERREAULT, Brian, M., Stow, MA 01775 (US); CLARK, Tracy, M., Bedford, MA 01730 (US); THORNTON, Richard, D., Concord, MA 01742 (US); YOUNG, Jason, Marlboro, MA 01752 (US); BOTTASSO, Michael, W., Maynard, MA 01754 (US)
(74) Representative: Grünecker Patent- und Rechtsanwälte PartG mbB
(86) International application number: PCT/US2010/021839
(87) International publication number: WO 2010/085670

(56) References cited:
- WO-A1-01/66378
- WO-A1-03/105324
- WO-A2-2007/013991
- JP-A- H07 193 914
- US-A- 431 057
- US-A- 3 845 720
- US-A- 5 094 172
- US-A- 5 277 285
- US-A- 5 287 026
- US-A- 5 473 992
- US-A- 6 101 952
- US-A1- 2003 217 668
- US-A1- 2007 283 841
- US-A1- 2008 083 346
- US-B1- 6 834 595
- Trelleborg Sealing Solutions: "Linear Bearings Turcite Slydway", https://www.trelleborg.com/seals/-/media/t ss-media-repository/tss_website/pdf-and-ot her-literature/catalogs/turcite_b_slydway_ gb_en.pdf, 15 November 2005 (2005-11-15), pages 1-15, XP055860788, Retrieved from the Internet: URL:https://www.trelleborg.com/seals/-/med ia/tss-media-repository/tss_website/pdf-an d-other-literature/catalogs/turcite_b_slyd way_gb_en.pdf [retrieved on 2021-11-12]
- RANKY PAUL G.: "MagneMotion's linear synchronous motor (LSM) driven assembly automation and material handling system designs", ASSEMBLY AUTOMATION, vol. 27, no. 2, 24 April 2007 (2007-04-24) , pages 97-102, XP055906617, GB ISSN: 0144-5154, DOI: 10.1108/01445150710733315
- Lindsay Craig Vaughn: "UNIVERSITY OF NATAL CORDLESS LINEAR SYNCHRONOUS MOTOR MATERIAL HANDLING SYSTEM FOR COMPUTER INTEGRATED MANUFACTURING", , 31 December 2000 (2000-12-31), pages 1-341, XP055906657, Retrieved from the Internet: URL:https://researchspace.ukzn.ac.za/xmlui /bitstream/handle/10413/5453/Lindsay_Craig _Vaughn_2000.pdf?sequence=1&isAllowed=y [retrieved on 2022-03-29]
- Hiwin: "M99LE03-0412 - Linear Motor Series", www.hiwin.com/catalogs/, 22 March 2007 (2007-03-22), pages 1-44, XP055906663, Retrieved from the Internet: URL:http://www.hiwin.com/catalogs/linear_m otors.pdf [retrieved on 2022-03-29]

## Description

### BACKGROUND OF THE INVENTION

The invention pertains to transport systems and more particularly, by way of example, to guideway-based transport system with short block linear synchronous motors. The invention has application, by way of non-limiting example, in production lines, laboratories and other applications requiring complex guideways, sharp turns, merge and diverge switching, and/or inverted operation.

There are many types of transport systems that can move objects on a guideway. Examples include: wheel-suspended vehicles propelled by rotary or linear motors, maglev or air-cushion suspended vehicles propelled by linear motors or cables, vehicles that move in tubes propelled by air pressure, vehicles supported or guided by bearings, and vehicles that are moved on conveyor belts. Existing transport systems have many useful applications but there are opportunities for substantial improvement, for example, in the precise movement of relatively small and closely spaced objects on a complex guideway.

Small and medium size objects are often transported on conveyor belts because this eliminates the need for wheels or other mechanisms to suspend, guide and propel the objects. Belt transport systems are relatively inexpensive but they lack precise control that is often needed and they require substantial maintenance because of many moving parts. Other approaches to low cost transport include air propelled vehicle moving in tubes and the use of gravitational forces to move objects down an incline, but these approaches have even less precise control.

The advantages of using linear synchronous motor (LSM) propulsion are well known and described in other patents (by way of non-limiting example, U.S. Patent Nos. 7,458,454, 7,448,327, 6,983,701, 6,917,136, 6,781,524, 6,578,495, 6,499,701, 6,101,952, and 6,011,508),
but in many cases, particularly, for example, when moving small and closely spaced objects, the LSM can be more expensive and provide less throughput than competing propulsive systems.

In view of the foregoing, an object of the invention is to provide improved transport systems, apparatus and methods.

A related object of the invention is to provide such systems, apparatus and methods as take advantage of LSM technologies.

Another related object of the invention is to provide such systems, apparatus and methods as are adapted for transport of small objects and/or medium-sized objects.

A further related object of the invention is to provide such systems, apparatus and methods as are adapted for use with closely-spaced objects.

Still another object of the invention is to provide such systems, apparatus and methods as are adapted for use in production lines, laboratories and other applications requiring complex guideways, sharp turns, merge and diverge switching, and/or inverted operation.

Ranky Paul G.: "Magnemotion's linear synchronous motor (LSM) driven assembly automation and material handling system designs", Assembly Automation, vol 27, no. 2, 24 April 2007, pages 97-102, relates to linear synchronous motor (LSM) driven assembly automation and material handling system designs. The core technology is the linear electric motor. This is an electromechanical system that can convert electrical energy directly into linear motion without using any rotary components. Each of a plurality of vehicles has a magnet array attached to its underside. The magnet array is the motor secondary. An LSM module contains the motor primary, as well as the driver/amplifier, position sensors, digital controller and serial communications. There is typically a physical gap of approximately 3 mm between the primary and secondary.

WO 03/105324 A1 discloses a controlled motion system, which has a mover that is movably mounted on a track for moving along a path. Active and reactive elements are associated with the track and mover, and are configured for driving and controlling the mover along the path. A controller is operatively associated with the active elements for controlling the driving of the mover, and a position sensor is associated with the track and configured for sensing the position information corresponding to the position of the mover along the path. The sensor is associated with the controller for transmitting the position information to the controller. The sensors are also preferably configured such that the position information is transmitted from the mover through the sensor at a sensing speed faster than about 10,000 meters per second. The controller is configured for controlling at least one mover independently from the others.

US 5 473 992 A discloses a small braking apparatus, which is able to completely and suddenly stop a moving portion such as a linear direct current motor at a desired location, is described, together with a drive unit equipped with the braking apparatus. The braking effect is obtained by providing a rotary member on a slider to move along a long guiding member, and providing a driving device which causes a braking member, which performs a braking action by engaging with said rotary member, to engage and move away from said rotary member.

### SUMMARY OF THE INVENTION

It is the object of the invention to provide enhanced propulsion properties for wheel-less vehicles in a linear synchronized motor system.

This object is solved by the subject matter of the independent claims.

Preferred embodiments are description by the dependent claims.

The foregoing are among the objects attained by the invention, which provides in some aspects an LSM-based transport system that includes a guideway with a plurality of coreless propulsion coils disposed along a region in which one or more vehicles disposed on the guideway are to be propelled, as well as electronic power and control circuitry that excites the propulsion coils independently so as to propel the vehicles along the guideway. The vehicles, according to these aspects of the invention, each include a magnetic flux source - for example, one or more Halbach or other magnet arrays.

Systems according to the foregoing aspect are advantageous for, among other reasons, that the vehicles on the guideway can be moved (or propelled) independently of one another in a controlled fashion - e.g., without risk of collision or uncontrolled motion - regardless of their proximity to other vehicles on the guideway.

The invention provides transport systems as described above in which the vehicles are disposed for sliding motion along guideway. According to the invention vehicles have a low coefficient of friction with the guideway, e.g., a coefficient of friction of less than substantially 0.2.

The guideway, according to related aspects of the invention, can include guidance structure - such as rails - that facilitate maintaining the vehicles on the guideway (or, put another way, that inhibit the vehicles from moving off the guideway).

In related aspects of the invention, the guideway of transport systems of the type described above is made up of a plurality of coupled (e.g., interlocked) modules. The propulsion coils may be mounted in those modules and more particularly, according to some aspects of the invention, on printed circuit boards that make up the modules. The coils are disposed within the modules so as to be in close proximity to magnet arrays (or other flux sources) of vehicles passing over them.

In still other related aspects, transport systems are provided as described above in which the modules comprise power controllers that form part of the electronic power and control circuitry and that are selectively electrically coupled to one or more of the propulsion coils, e.g., of the respective modules. Microprocessor(s) and/or switches can also be provided to provide electrical coupling between the power control circuitry and the propulsion coils.

Yet still other aspects provide transport systems as described above in which the guideway comprises merge and/or diverge regions, each of which may include mechanically and/or magnetically actuated switches to alter the course of passing vehicles. These merge and diverge regions, as well as straight-away regions, that make up the guideway may comprise one or more of the aforementioned coupled modules.

Further related aspects provide transport systems as described above in which at least one of the diverge regions comprises a plurality of coreless propulsion coils spaced along a region in which the course of passing vehicles is altered - that is, spaced along a corner, curve and/or branch - so as to propel the vehicles through the diverge. According to related aspects a merge region can be similarly equipped with a plurality of such coils.

Further aspects provide a transport system, e.g., as described above, that includes a switching member that is disposed adjacent a diverge (or switching) region of the guideway and that is selectively moveable relative to the guideway in order to change a magnetic force acting on the vehicle transverse to a direction of motion of the vehicle along the guideway.

According to related aspects, the switching member of a transport system, e.g., as described above, has (i) a first configuration that is associated with motion of the vehicle from an ingress path of the diverge or switching region to the first egress path of that region, and (ii) a second configuration that is associated with motion of the vehicle from the ingress path to a second egress path of the region.

According to further related aspects of the disclosed transport systems, the switching member of a transport system, e.g., as described above, comprises a ferromagnetic material that is configured to move, e.g., under control of an actuator, by at least one of pivoting, translating, and bending.

According to further related aspects of the disclosed transport systems, the switching region of a transport system, e.g., as described abovem can include a further moveable switching member that is disposed adjacent the switching or diverge region, e.g., opposite the aforementioned switching member, and that is selectively moveable in cooperation therewith to to change a magnetic force acting on the vehicle transverse to a direction of motion of the vehicle along the guideway.

According to further related aspects of the disclosed transport systems, the switching region of a transport system, e.g., as described above, can include a further switching member that is fixed, rather than moveable. This fixed member effects a magnetic attraction force on the passing vehicle sufficient to bias it toward a one of the egresses, e.g., when the switching member is not positioned to effect routing to the another egress.

Other aspects of the invention provide a guideway module, and a vehicle according to the appended independent claims 10 and 18 for use on the transport system according to the invention as defined in claim 1, constructed and/or operated as discussed above. Still other aspects of the disclosure provide methods of operating transport systems, guideways, guideway modules, and vehicles for use thereon paralleling the foregoing.

### BRIEF DESCRIPTION OF DRAWINGS

A more complete understanding of the invention may be attained by reference to the drawings, in which:
FIG. 1 depicts a system, including a straight guideway and vehicles propelled thereon by an LSM in close proximity while sliding on a low friction guideway surface and guided by rails on the side of the guideway.
FIG. 2 shows details of a vehicle used to hold objects for moving on the guideway in Figure 1.
FIG. 3 shows vehicle guidance mechanisms and magnet array in a system.
FIG. 4 is similar to Figure 3 but with a Halbach Array for the magnets.
FIG. 5 is similar to Figure 3 but with a single magnet used for propulsion.
FIG. 6 shows a guideway including a printed circuit board, with propulsion coils mounted on it, in close proximity to the guideway surface, and connected to power control circuitry on the circuit board.
FIG. 7 shows a typical waveform of current in a coil as a vehicle moves by in a system.
FIG. 8 shows vehicles negotiating a sharp 90° horizontal turn in a system.
FIG. 9 shows vehicles negotiating a sharp 180° vertical turn in a system.
FIG. 10 shows a right diverge in a system with vehicle direction determined by the position of a small flipper.
FIG. 11 shows a turntable which can be used in a system in lieu of a curve to effect diverge and merge operations.
FIG 12 shows propulsion coils providing continuous force on vehicles moving on a right diverge module of a system.
FIG. 13 shows a vertical transition in a system.
FIG. 14 shows an example of a system.
FIGS. 15 - 16 shows a guideway and vehicle in a system.
FIG. 17 is a perspective view of a straight-away section of a guideway in a system.
FIG. 18 is a perspective view of a right-diverge section of a guideway in a system.
FIGS. 19A- 19D show alternate configurations of sections of a guideway in a system.
FIGS. 20A - 20B show a top view of a right-diverge section of a guideway in a system.
FIG. 21 is a cut-away perspective view of a right-diverge section of a guideway in a system.

### DETAILED DESCRIPTION OF THE ILLUSTRATED EMBODIMENT

### Introduction

Described here is an LSM-based transport system that allows vehicles to move on a guideway that can be complex and that can include sharp horizontal and vertical turns, merge and diverge switching, and inverted operation. Examples of applications include: moving bottles on an assembly line while they are being filled and capped, moving vials in a laboratory for analysis, moving electronic devices along a production line so that robots can insert components, and sorting objects that arrive from a multiplicity of sources and must be delivered to appropriate locations. In some cases it is feasible to use wheels, bearing or other rolling elements to assist in suspension and guidance, but this invention is used in cases where there are no wheels (or other rolling elements) and the vehicles slide on a guideway's running surface. Wheel-less vehicles can be small and inexpensive when the objects to be moved are not too large. For heavier vehicles the same short block design is suitable for wheel- or bearing-based suspension and guidance.

The result is a transport system that provides an economically viable means of using LSM propulsion to propel and control closely spaced small to medium size vehicles on a guideway.

Among other aspects of the systems described herein are LSM motor modules that also function as the transport system track (or "guideway") pieces. A selection of standard track building blocks fit together in a plug-and-play manner to form an almost endless variety of layout options. The motor modules (or "motors", for short) can contain not only the propulsion and intelligent routing elements, but also the guidance and structural support features to allow for rapid assembly and track configuration. The system is ideally suited, by way of non-limiting example, for environments requiring clean operation and/or wash down capability. It can also support "track and trace" requirements, as each vehicle can be uniquely identified and constantly tracked throughout the system.

A suspension system with a coefficient of friction obtainable with sliding motion can beneficially be used with an LSM with negligible attractive force. This is achieved, according to the invention, by using a coreless motor with propulsion coils mounted, e.g., in close proximity to the vehicle magnets.

The text that follows describes components and operation of embodiments of the invention. It is understood that many variations on this design are possible and are contemplated by the invention, but this description shows how to achieve the foregoing and other objectives with a simple system that can be manufactured at a reasonable cost.

### Guideway

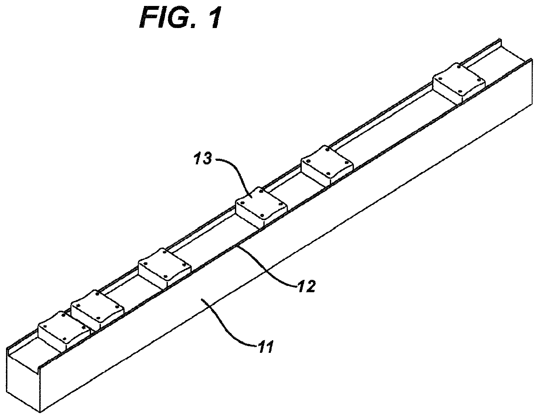

Figure 1 shows a straight section of guideway with vehicles 13 moving in close proximity. The structure of the guideway can provide guidance in one or more dimensions by rails 12 on the side. For applications where the vehicle does not have wheels they slide on the guideway's running surface and special materials (discussed below) are used to minimize friction. The guideway housing 11 contains all of the electronics including position sensing means, propulsion coils, power electronic components, and microprocessors.

The design shown in these Figures is based on vehicles that are about 50 mm wide and 50 to 60 mm long. For larger objects the guideway and vehicle dimensions can be scaled, much as model railroads have been constructed with a variety of scaling factors.

### Vehicle

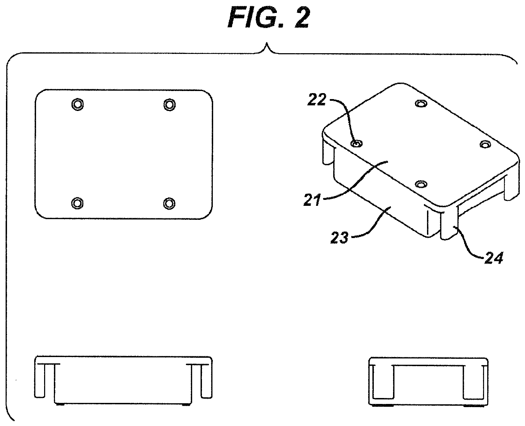

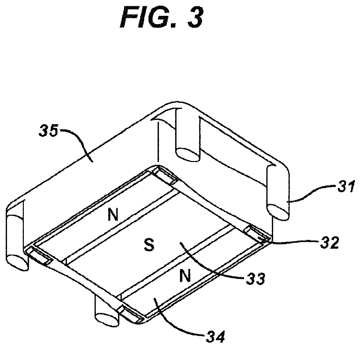

Figures 2 and 3 show a vehicle 21 that can be used as part of the proposed transport system. It is relatively small, about 50 mm square and 20 mm high, and has components 32 (here, disposed on the lower surface of vehicle 21) with running (or "sliding") surfaces that slide on the running (or "sliding") surface of the guideway. Holes 22 in the top of the vehicle are used to mount support mechanisms for the objects that are to be moved.

The vehicle has curved sides 23 that match the sides of a curved guideway so as to allow short radius horizontal turns. It is guided by the guideway and can move in a normal upright position when transporting an object as well as moving in an inverted position when not carrying an object. It can also negotiate vertical turns. Pins 24, 31 in the corners of the vehicle interact with mechanisms in the diverge and modules so as to control the direction of motion.

Figure 3 is a view of the lower surface of the vehicle and shows the permanent magnets 33, 34 that are mounted near the bottom of the vehicle and provide the means for LSM propulsion.

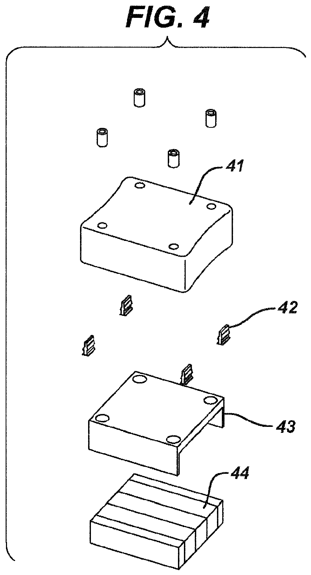

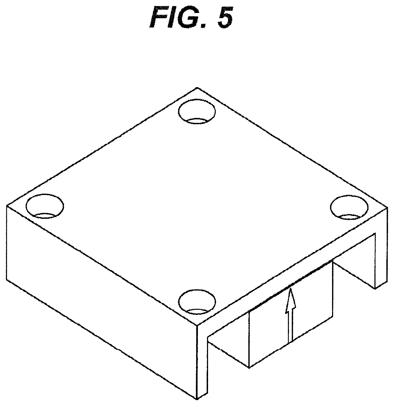

Figure 4 shows a variation of Figure 3 in which a Halbach Array 44 is used for the magnet structure so as to create higher force for a given weight. Figure 5 shows a single magnet structure 51 that is suitable for applications where less force is required.

Larger objects can be moved on this same guideway by using a double-bogey design, as has been used with conventional LSM designs (see, for example, U.S. Patent 7,458,454, entitled "Three-dimensional Motion Using Single-Pathway Based Actuators," issued December 2, 2008, and U.S. Patent Application 2007/0044676, entitled "Guideway Activated Magnetic Switching of Vehicles," published March 1, 2007), or by increasing the dimensions of guideway and vehicles.

### Low friction sliding surface

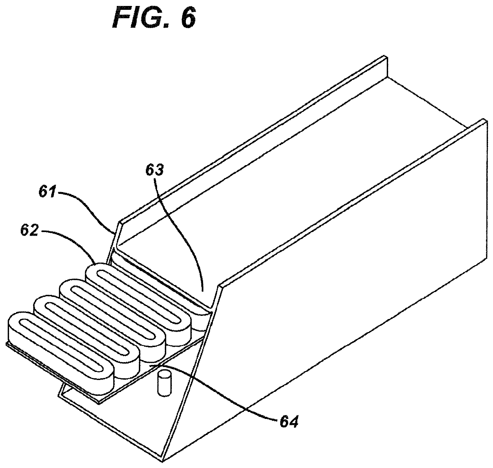

In order to reduce the required propulsive force and heating from friction, the vehicle and guideway of the illustrated embodiment are designed to minimize the coefficient of friction *c_{f}*, which is the ratio of the propulsive force needed to move the vehicle to the gravitational force of the vehicle on the guideway. In some cases wheels can be used as a way to reduce this force, but this invention allows the use of wheel-less vehicles. Figure 6 shows the guideway with low friction running (or "sliding") surface 63 that supports vehicles in close proximity to the propulsion coils 64.

Examples of low friction for wheel-less applications include Teflon sliding on Teflon and Teflon sliding on stainless steel. Lower friction is possible if the surface can be lubricated by a thin film, but for many applications this is not allowable so the design assumes no lubrication. It is also preferable that the surface have good wear characteristics so, for example, we might use stainless steel on the guideway and Teflon on the vehicle with the expectation that there would be negligible wear on the steel but the vehicle might eventually need to have its sliding surface replaced, an action that is less expensive than replacing the guideway. Sliders 32 in Figure 3 are examples of how low friction components can me mounted. They may be designed so as to be replaceable if it is expected that they will wear out before the vehicle reaches end of life.

With some designs *c_{f}* can be as low a 0.1 but more practical values are in the range 0.15 to 0.2. Because this is a relatively high value it is preferred that the propulsive force not create substantial downward force on the vehicle. A typical LSM using ferromagnetic material will exert an attractive force that is four to six times the propulsive force and with this much attractive force the vehicle may not be able to move, or if it did move there would be substantial heating and power wasted - in such instances, wheels, bearings or other rolling elements can be incorporated for suspension of the vehicles.

### Magnet array

There are many types of magnet arrays that can be used, one of which is shown in Figure 3. With this design there is one middle magnet 33 that has the South pole on the lower surface and two half magnets 34 on the ends that have a North Pole on the lower surface. Typically the magnets use NdFeB in order achieve high fields but they can use other materials, such as ceramic when cost or external fields must be low or Samarium Cobalt when the operating temperature is high.

One design consideration is the interaction between magnets on adjacent vehicles. The ferromagnetic piece 35 largely prevents magnetic fields from adjacent vehicles from interfering with each other.

Figure 4 shows a Halbach Array which can be used where higher force is required and the added cost is acceptable. With this design the magnetic field rotates from one magnet to the next with a resulting higher propulsive force than is possible with the magnet design in Figure 3. Ferromagnetic shield 43 minimizes interactions between the fields of adjacent vehicles.

Figure 5 shows a single magnet providing all of the magnetic flux with ferromagnetic material on the ends used to provide a return path. This may not produce as much force but can be less expensive than multi-magnet designs.

### Linear motor propulsion

Figure 6 shows coils 64 mounted in close proximity to the guideway running surface 63. Currents in these coils are individually controlled via power electronic components and microprocessors so that each vehicle can be individually controlled even when it is touching neighboring vehicles.

A feature of the illustrated embodiment is the lack of ferromagnetic material that is commonly used in an LSM to make it more efficient. With no ferromagnetic material we can not achieve as high a force, but we can limit the attractive force to a small fraction of the propulsive force and thereby allow strong acceleration and braking forces to move the vehicle when the coefficient of friction is on the order of 0.2 or higher.

In embodiments that use wheel-based vehicles the friction force may be small enough that some ferromagnetic material can be used in the stator so as to achieve higher propulsive force.

Software for controlling the microprocessors can be similar to control software used on LSM designs with blocks that are several coils long. Here, however, position sensing components are located close enough together that they can identify individual vehicles even when the vehicles are touching. Such sensing facilitates control of the movement of the vehicles independently of one another on the guideway. Prior demonstrations of locally commutated LSMs have shown that this software does not require special features.

### PC board mounted coils and control circuitry

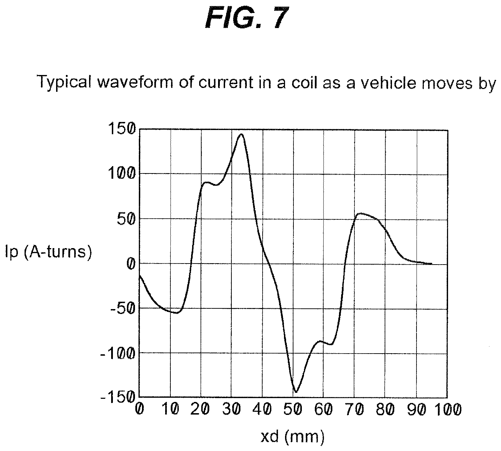

The illustrated embodiment permits the control of each coil individually without the cost associated with conventional designs. With reference to Figure 6, there is shown an embodiment in which the coils 62 are mounted directly on a Printed Circuit Board (PCB) 64. This board supports the coils and provides connections between the coils and the power electronic modules that control the current. Typically each coil is connected to the output of an "H-bridge" with MOSFET or IGBT devices used to control the amount and direction of current in each coil. These components are mounted on the same PCB. The PCB also holds Hall Effect devices that sense the magnetic field produced by the vehicle and allow a microprocessor to create a desired force. Figure 7 shows a typical waveform of the current in a propulsion coil that will propel a vehicle as it moves by the coil. By proper choice of waveform several propulsion coils can work in unison to create a constant force on the vehicle with minimum power loss in the coil. For braking the sign of the current is reversed.

By mounting the coils directly on a PC board and by using integrated power controllers it is possible to reduce the cost for the coils and electronics. One microprocessor can control a multiplicity of H-bridges but with a coil spacing on the order of 16 mm there can be more than a dozen microprocessors per meter of motor, and the operation of these motor controllers must be coordinated by a higher level "node" controller. With modern semiconductor technology, and for low to moderate power levels, all of these components can be mounted on only one or two PCBs that are contained in the motor housing.

### Guideway modules

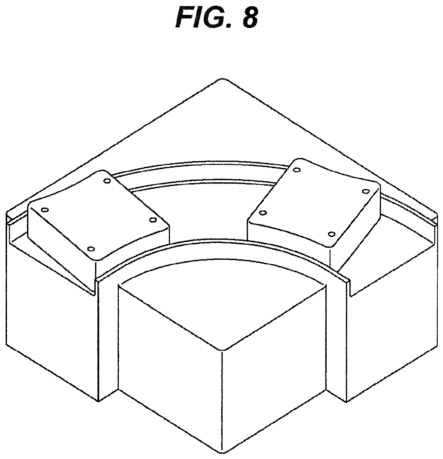

The guideway is built of modules much as a model train layout is constructed from modules. Figures 6, 8 - 11 and 13 show examples of a straight section, a 90° horizontal curve, a 180° vertical curve, a right diverge switch, a turntable, and a vertical transition. These components can be interconnected in a variety of ways to meet the requirements of many and diverse applications.

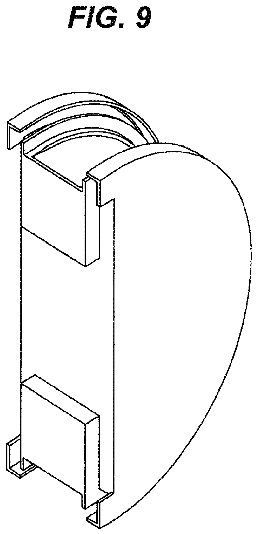

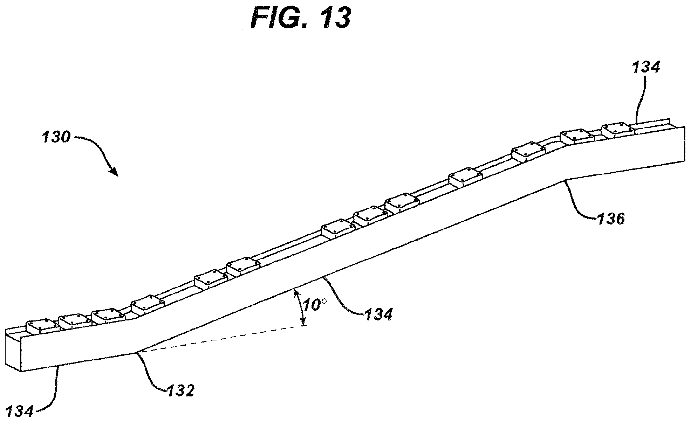

The 180° vertical curve in Figure 9 is primarily used as a means to return empty vehicles to a starting point and vehicles negotiating this curve may be controlled and propelled by other means than an LSM. For example, vehicles going down may be propelled by gravity and vehicles going up may be propelled by interaction with a mechanical mechanisms and in both cases there may not be precise control during the curve transition. It is preferable that once the vehicles have negotiated this curve precise control is regained. In some cases there is a vertical curve with a much larger curve radius, such as used as a transition between a level guideway and an inclined guideway. (See, for example, Figure 13). In this case LSM propulsion can be used for the vertical curve and thereby retain precise control through the curve.

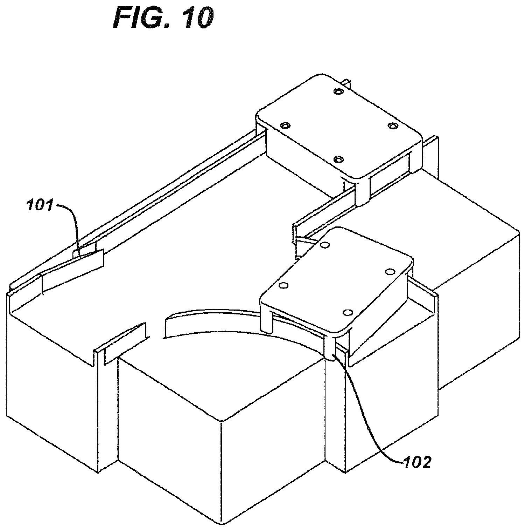

Figure 10 shows a right diverge using a small mechanical or magnetic flipper 101 that directs a moving vehicle to go either straight ahead or diverge to the right. The flipper is controlled by a linear or rotary actuator that interacts with pins 102 on the vehicle to steer the vehicle in the correct direction. The same device can be used to merge two streams of vehicles. The flipper is small and light so it can move from one position to another in a small fraction of a second and thereby allow high throughput with adjacent vehicles able to be switched independently. A left diverge can be constructed as a mirror image of the right diverge.

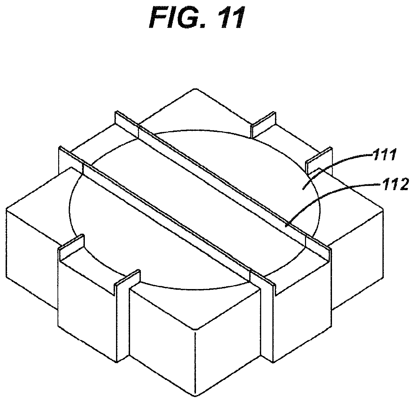

Figure 11 shows a turntable 111 as an alternative to the flipper. Guidance rails 112 on the turntable and propulsion coils, not shown, guide and propel the vehicle. The turntable in Figure 11 can rotate in 90° increments, but other designs can support motion for a variety of angles. The turntable tends to be slower than the flipper because of the added mass, but is less expensive for some applications and has greater versatility because it can be used in lieu of curves as well as to reverse vehicle direction and switch between a multiplicity of tracks.

Figure 13 depicts a vertical transition 130. In the illustrated embodiment, this includes a concave transition piece 132, straight sections 134 and a convex transition piece 136, coupled as shown. The illustrated transition is 10° along the vertical axis, though, in other embodiments greater or lesser angles may be employed. Although the angle of the vertical transition shown here is established by transition pieces 132, 136, in other embodiments the transition may be defined by other pieces (e.g., incorporated into diverges, straight-sections, and so forth).

The switching function can also be provided by magnetic forces acting on the vehicle. For example, coils on and near the guideway can be controlled so as to create lateral forces that will perform the switching function. This approach to switching is described in U.S. Patent Application US 2007/0044676, entitled "Guideway Activated Magnetic Switching of Vehicles,".

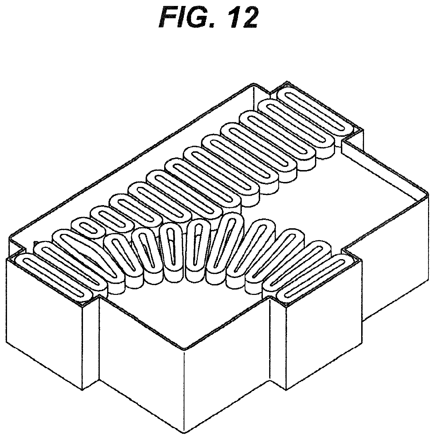

Figure 12 shows a cutaway view of a guideway diverge module showing propulsion coils for propelling vehicles on either of two paths. This continuous propulsion through a diverge or merge is essential to providing precise position control at all times.

A further appreciation of techniques for packaging the linear motor and other module components of the guideway modules may be attained by reference to United States Patent No. 6,578,495, entitled "Modular Linear Motor Tracks and Methods of Fabricating Same,".

### Application Example

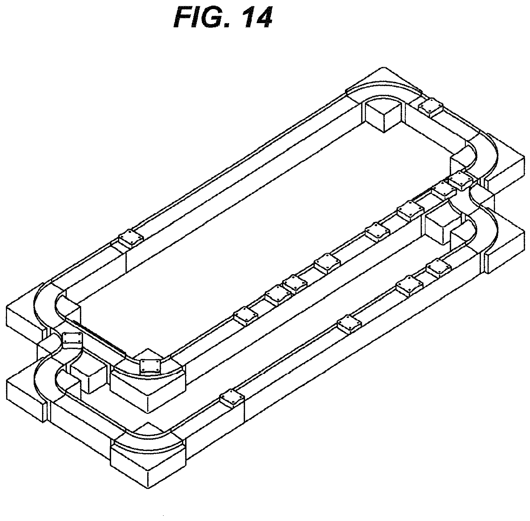

There are many possible applications but the simple layout in Figure 14 shows how the guideway modules can be interconnected. Vehicles move around the main loop but can move though a bypass when desired. Typical applications will use many more guideway modules than in this simple example.

### Additional Embodiments

As evident in Figures 1 - 14, in some embodiments the running or sliding surface of the guideway comprises an upper surface of the guideway immediately adjacent the propulsion coils, for example, as indicated by surface 63 and coils 64 of Figure 6 and discussed above. In other embodiments, such a running or sliding surface can be another upper-facing (or vehicle-contacting) surface of the guideway - for example, a surface of a rail, ledge, recess, or flange of the guideway. That surface can be immediately adjacent to the coils 64 or offset therefrom.

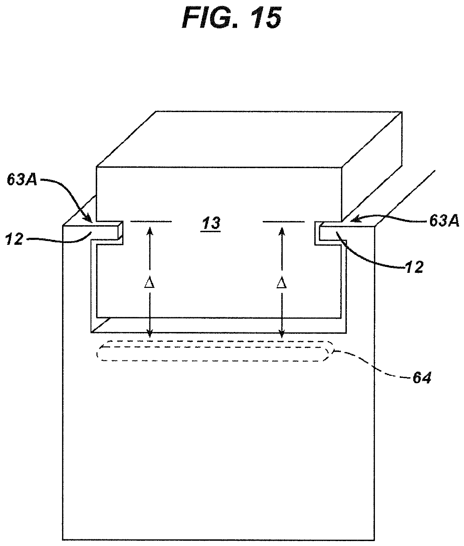

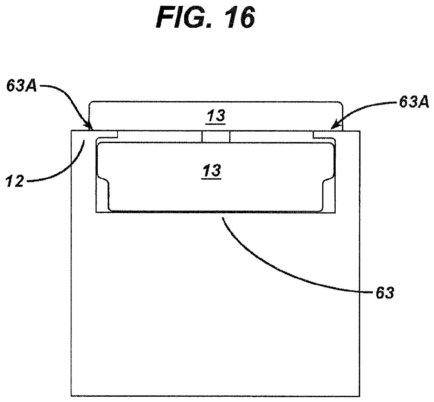

This is shown, for example, in Figure 15, wherein surfaces 63A, which are offset from the coils by a distance Δ provide low friction running (or "sliding") surfaces that support the vehicle 13. The two surfaces 63A arc shown in the drawing, other embodiments may incorporate fewer or greater such surfaces in (or out) of combination with other surfaces, such as surface 63 of Figure 62. This is shown, for example, in Figure 16. In the embodiments of Figures 15 and 16, running surfaces 63A of the guideway form part of guidance rails 12, though, in other embodiments these may comprise separate structures of the guideway (or otherwise).

Likewise, as also evident in Figures 1 - 14, in some embodiments the running or sliding surfaces of vehicles 13 can be provided by sliders 32 or other components of the vehicles), for example, as indicated by Figure 3 and discussed above. In other embodiments, such running or "sliding" surfaces can be other downward-facing (or guideway-contacting) surfaces of the vehicles - for example, surfaces of rails, ledges, recesses, or flanges of the vehicles. This too is shown, for example, in Figure 15, wherein surfaces 32A provide low friction running (or "sliding") surfaces that slide on the running or sliding surface of the guideway, here, surfaces 63A.

In embodiments such as those shown in Figure 15, as well as in other embodiments of the invention, the sliding surfaces 32A, 63A, and so forth, are sized and otherwise designed to minimize the coefficient of friction *c_{f}*, as discussed above, as well as to provide adequate support for the vehicles 13 under expected operating conditions.

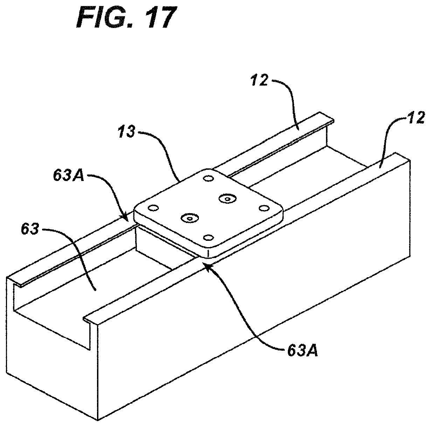

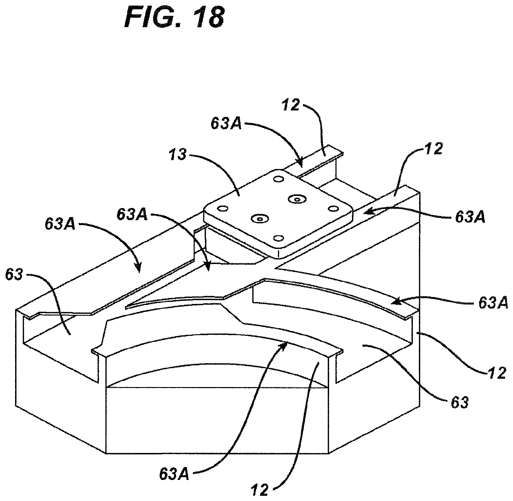

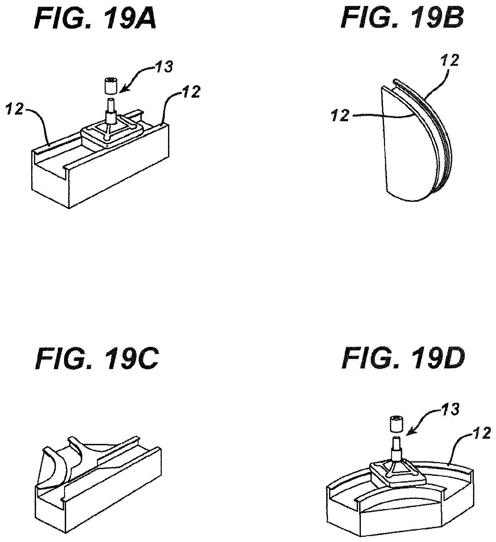

A further appreciation of the embodiments shown in Figures 15 - 16 may be attained by reference to Figure 17, which is a perspective view of a straight-away section of a guideway of such embodiments; Figure 18, which is a perspective view of a right-diverge section of a guideway of such embodiments; Figures 19A - 19D, which are perspective views of straight-away, left-diverge, vertical turn, and curve sections of a guideway of a such embodiments.

In regard to Figure 18 and other sections that support a merge or diverge function, the running services 63A of rails 12 can be broadened and/or narrowed, e.g., as shown in the drawing, in order to provide greater a guidance or channeling function.

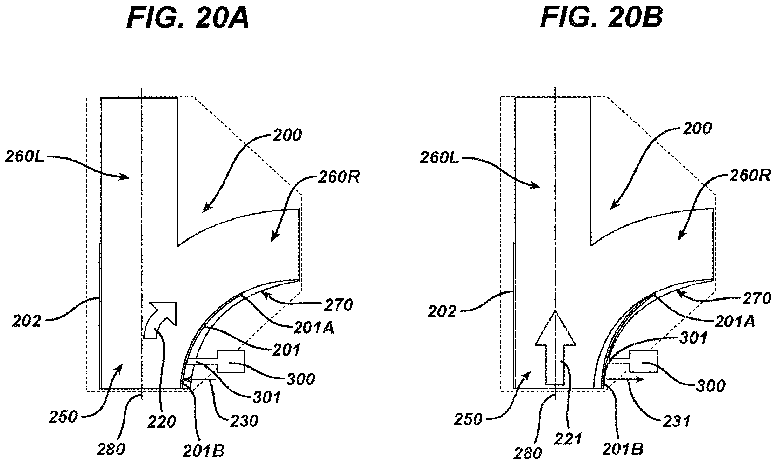

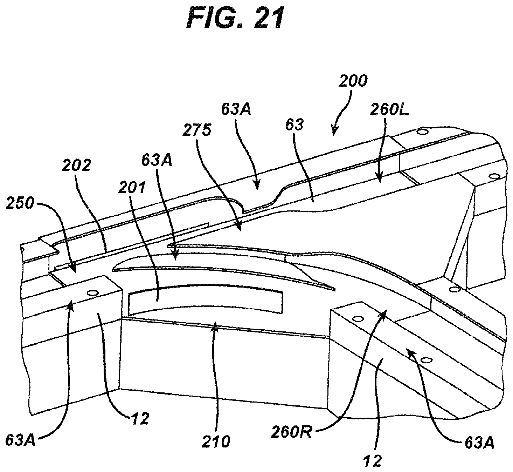

As evident in the discussion above and shown in the drawings, switching can be effected via turntables, as well as by the use of mechanical flippers or magnetic switching members acting at or near merge or diverge regions of the guideway. Guideway configurations utilizing the latter are more fully detailed in Figures 20A - 20B and 21 and discussed below. Though only diverge sections are shown in those drawings, it will be appreciated that flipper and switch arrangements as shown herein can be employed with other guideway modules and/or configurations, as well.

Referring to Figures 20A and 20B, there is shown a diverge or switching region of a guideway.

The illustrated diverge region 200, which may comprise one or more modules of the type described above (albeit configured and operated as discussed here), comprises an ingress path 250 and two or more egress paths, here, egresses 260L and 260R, as shown. A switching member, e.g., flipper 201, is disposed along a lateral (or outside) portion 270 of the guideway region 200 and, indeed, can be disposed within a lateral (or side) rail 270 of the guideway, as shown. In other embodiments, the switching member 201 may be disposed on a medial portion of the guideway 275, e.g., at or closer to a centerline 280 of travel of vehicles moving thereon, or otherwise. Regardless, the flipper 201 (or other switching member) is preferably disposed along the guideway at a location at or near a point where the egresses diverge from one another (e.g., the branch-point or crotch of the diverge).

The switching member 201 comprises a ferromagnetic material suitable for effecting magnetic attraction between the member 201 and a passing vehicle - i.e., a vehicle that is moving on the guideway in vicinity of the member 201 (e.g., near the branch-point of the diverge) - e.g., in a direction transverse to the vehicle's direction of motion along the guideway and, thereby, selectively altering the course of the passing vehicle. In the illustrated embodiment, such attraction is particularly effected between the member 201 and a permanent magnet disposed on such a vehicles, though, in other embodiments, attraction may be to other magnetic elements on the vehicle. Illustrated switching member (here, flipper 201) is shaped as a flat, rectilinear member, though, in other embodiments it may be shaped otherwise.

Referring to Figure 20A and 20B, an actuator 300 is coupled (e.g., via rod 301 or otherwise) to the switching member 201 in order to
- place the switching member in a first position (and, more generally, in a first configuration), whereby the switching member exerts a greater lateral magnetic attractive force on the passing vehicle and, thereby, causes it to exit the diverge region 200 via one of the egresses,
- place the switching member in a second position (and, more generally, in a second configuration), whereby the switching member exerts a lesser lateral magnetic attractive force on the passing vehicle and, thereby, causes it to exit the diverge region 200 via another of the egresses,
- move the switching member 201 between the first and second positions (or configurations).

The actuator may comprise a servo, solenoid, lever, spring, motor, or other mechanism (or combination thereof) of the type known in the art suitable for so placing and moving the switching member. The actuator may operate under control of a microprocessor or other control device (not shown) of the conventional type known in the art (as adapted in accord with the teachings hereof) to route the passing vehicle passing through diverge region.

With reference to Figure 20A, the actuator 300 is shown positioning flipper 201 in the first configuration - here, pivoted on a fixed end 201A (e.g., on pin or other pivot member) such that a free end 201B is rotated into a first rotational position - in order to effect passage of the vehicle (here, represented by arrow 220) to egress 260R. With reference to Figure 20B, the actuator 300 positions flipper 201 in the second configuration - here, pivoted on fixed end 201 such that a free end 201B is rotated into a second rotational position - in order to effect passage of the vehicle (here, represented by arrow 221) to egress 260L.

As evident in these drawings, the first and second configurations of the illustrated embodiment represent differing rotational positions of the flipper 201 that place the free end 201B closer (in the case of Figure 20A) and further (in the case of Figure 20B) to the passing vehicle and which, thereby, effects differing attractive forces on it. In other embodiments, other configurations may be utilized instead or in addition. By way of example, the free and fixed ends of the flipper 201 of may be reversed (e.g., from that shown in the drawing). By way of further example, the actuator may be coupled with the flipper (or other switching member) so that the entire member 201 (as opposed to merely a free end) is disposed closer to vehicle in the first configuration and further in the second configuration. By way of still further example, the flipper or other member may be flexible and the actuator may be disposed so as to cause it to bend so that portions of it are closer to the vehicle in the first configuration and to bend further from the vehicle in the second configuration. These and other alternatives will be evident to those of ordinary sill in the art in view of the teachings hereof.

Though only a single moveable switching member 201 is shown in the drawings and described above, it will be appreciated that another such member may be provided, as well. This may be, for example, a moveable switching member that is like member 201, but that is disposed along a lateral portion of the guideway region 200 opposite member 201 (along the guideway at a location at or near the branch-point or crotch of the diverge) and that moves in cooperation with illustrated member 201 to facilitate routing the passing vehicle to the first or second egresses.

Alternatively, the further member may be a non-moveable (or fixed) member - such as a permanent magnet or other ferromagnetic element - that effects a magnetic attraction force on the passing vehicle sufficient to bias it toward a one of the egresses, thereby, insuring routing of the vehicle to that egress, when the switching member 201 is not positioned (by the actuator 300) to effect routing to the another egress. Such a fixed element may be disposed along a lateral portion of the guideway region 200 opposite illustrated switching member 201 or otherwise (e.g., on a medial portion of the guideway). As with moveable member 201, the non-moving member disposed along the guideway at a location at or near the branch-point or crotch of the diverge, and it may be shaped as a flat, rectilinear member - or otherwise.

Further appreciation of the exemplary switching embodiment discussed above can be attained by reference to Figure 21, which is a cut-away perspective view of a right-diverge section 200 of a guideway similar to that shown in Figure 18. Portions of the guidance rails 12 and the surfaces 63A are not shown in Figure 21 so that the flipper 201 and fixed-plate non-moveable member 202 of the type discussed above can be seen. As illustrated, the flipper 201 is disposed in a gap 210 between opposed portions of the guidance rails 12.

A further appreciation of the embodiments discussed above may be attained by the following remarks:.
- The operation of illustrated diverge region 200 depends on the attraction forces between permanent magnet on the vehicle and the ferromagnetic plates on the side of the guideway. The magnets one the vehicle are primarily used to produce a field below the vehicle for propulsion, but there is a strong enough field on the side of the vehicle to create enough force for controlling the vehicle direction. If desired, additional magnets could be added solely to facilitate switching.
- As discussed above, Figure 21 shows a small fixed plate 202 on the side of the straight side of the diverge 200 and a movable plate 201 on the diverge side. If it is desired that the vehicle go straight, the movable plate 201 can be positioned several millimeters from the edge of the guideway so there is not much force tending to pull the vehicle into the diverge. In this case the plate 202 on the straight side ensures that the vehicle goes straight. If it is desired that the vehicle diverge, than the movable plate 201 can be positioned in close proximity to the edge of the guideway and, because the movable plate 201 is larger than the fixed plate 202, there is a net force pulling the vehicle into the diverge path. As the vehicle begins to diverge, the differential force increases and becomes large enough to counter the centrifugal force of the turning vehicle.

- There are several ways in which the movable plate 201 can be controlled. For example, it can be attached to a pivot and driven by a rotary motor, or it can be moved laterally by magnetically based forces.
- In some embodiments, the switching function is provided by magnetic forces applied to a vehicle traveling on the guideway. The magnetic forces can be used to control the direction of a vehicle at a diverge region of the guideway or at a merge region of a guideway. For example, one or more switching members, e.g., a flipper, can be disposed on the guideway. The one or more switching members can be configured so that when at least one of the one or more switching members is activated, e.g., by moving, a magnetic flux between the at least one of the one or more switching members and a magnetic flux source on the vehicle is changed. For example, the switching member can move by pivoting, translating, bending, or any combination thereof.
- The magnetic flux source on the vehicle can include permanent magnets or electromagnets. The magnetic flux source used for switching can also be used to provide the means for LSM propulsion. However, the vehicle can also include additional and separate permanent magnets or electromagnets configured to provide a magnetic flux source separate from any magnetic flux source used for propulsion.

Discussed above are diverge regions that utilize magnetic switching members acting at or near merge or diverge regions of the guideway. It will be appreciated that the illustrated embodiment is just an example of transport systems and modules providing such regions. Thus, for example, though the moveable and fixed switching members referred to here effect magnetic attraction with a vehicle in the vicinity thereof on the guideway, in other embodiments, one or more of the switching members may rely on magnetic repulsion instead. And, though the illustrated diverge region has straight and branched egresses, diverge regions of other embodiments may be of different configuration. For example, the diverge region may be Y-shaped. Moreover, it may have (instead or in addition) additional egresses.

## Claims

1. A transport system without wheels or other rolling elements, comprising:
A. a guideway including a plurality of coreless propulsion coils (62, 64) disposed along a region in which one or more vehicles (13, 21) are to be propelled and a running surface (63, 63A) supporting the one or more vehicles (13, 21) in close proximity to the coreless propulsion coils (62, 64);
B. one or more wheel-less vehicles (13, 21) disposed on the running surface (63, 63A) of the guideway, each of the vehicles containing a magnetic flux source (33, 34, 44), the one or more vehicles (13, 21) being slidingly disposed on the running surface (63, 63A) of the guideway, the one or more vehicles (13, 21) having a low coefficient of friction with the running surface (63), the coefficient of friction being less than 0.2, wherein the one or more vehicles comprise low friction components (32) disposed on a lower surface of the one or more vehicles, the low friction components having sliding surfaces that slide on the running surface of the guideway; and
C. electronic power and control circuitry that excites the propulsion coils (62, 64) independently so as to propel the one or more vehicles (13, 21) along the guideway.

2. The transport system of claim 1, wherein any of
B. the system comprises one or more position sensors monitor the position of vehicles (13, 21) moving on the guideway;
C. the magnet flux source (33, 34, 44) of at least one of the vehicles (13, 21) comprises one or more magnets (33, 34); and, optionally, the one or more magnets (33, 34) comprise a Halbach magnet array (44);
D. one or more of the vehicles (13, 21) are slidingly disposed on a vehicle-contacting surface (63, 63A) of any of a rail, ledge, recess, or flange of the guideway.

3. The transport system of claim 1, wherein any of
A. a guidance structure on any of the guideway and the one or more vehicles (13, 21) inhibits the one or more vehicles (13, 21) from moving off the guideway; and, optionally, the guidance structure comprises one or more rails (12) that are disposed on the guideway;
B. the propulsion coils (62, 64) are mounted on one or more printed circuit boards (64); and optionally, the guideway comprises a plurality of coupled module and one or more of the modules include one or more of the printed circuit boards (64) with propulsion coils (62, 64) mounted thereon.

4. The transport system of claim 1, wherein the guideway comprises a plurality of coupled modules; and, optionally wherein
one or more of the modules comprise one or more power controllers that form part of the electronic power and control circuitry and that are selectively electrically coupled to one or more of the propulsion coils (62, 64); and further optionally wherein the one or more power controllers are selectively electrically coupled to the propulsion coils (62, 64) of the associated module for independent control thereof; and wherein one or more of the modules comprise one or more microprocessors and one or more switches that provide electrical coupling between the power control circuitry and the propulsion coils.

5. The transport system of claim 1, wherein the guideway includes at least one of a merge region and a diverge region (200).

6. The transport system of claim 5, wherein at least one of said merge regions and diverge regions (200) comprises a plurality of coreless propulsion coils (62, 64) disposed along a region in which the course of passing vehicles is altered.

7. The transport system of claim 5, the guideway comprises a straight-away region, along with at least one of a merge region and a diverge region (220).

8. The transport system of claim 7, wherein any of
A. any of the merge region and the diverge region (200) include a mechanically actuated switch (201) that alters a course of a vehicle (13, 21) passing thereon;
B. any of the merge region and the diverge region (200) include a magnetically actuated switch (201) that alters a course of a vehicle (13, 21) passing thereon.

9. The transport system of claim 5, wherein the diverge region comprises a switching member (201) that is disposed adjacent the switching region and that is selectively moveable relative to the guideway in order to change a magnetic force acting on the vehicle (13, 21) transverse to a direction of motion of the vehicle (13, 21) along the guideway; and, further optionally, wherein
A. the switching region includes (i) an ingress (250), (ii) a first egress region (260L), and (iii) a second egress region (260R),
B. the switching member (201) has (i) a first configuration that is associated with motion of the vehicle (13, 21) from the ingress region (250) to the first egress region (260L), and (ii) a second configuration that is associated with motion of the vehicle (13, 21) from the ingress region (250) to the second egress region (260R), and, optionally, wherein the switching member (201) is selectively moveable from the first configuration to the second configuration.

10. A guideway module configured for being used in a transport system without wheels or other rolling elements according to one of claims 1 to 9, the guideway module comprising
A. one or more coreless propulsion coils (62, 64) disposed along a region in which one or more vehicles (13, 21) that include magnetic flux sources (33, 34, 44) are to be propelled;
B. a running surface (63) adapted to support the one or more wheel-less vehicles (13, 21) slidingly disposed on the running surface (63) in close proximity of the coreless propulsion coils (62, 64), the running surface (63) having a low coefficient of friction with the one or more vehicles (31, 21), the coefficient of friction being less than 0.2, wherein the one or more vehicles (13, 21) comprise low friction components (32) disposed on a lower surface of the one or more vehicles (13, 21), the low friction components having sliding surfaces that slide on the running surface (63) of the guideway; and
C. electronic power and control circuitry that excites the one or more propulsion coils (62, 64) independently of one or more other propulsion coils (62, 64) in any of
(a) the guideway module, and
(b) a guideway in which that guideway module is incorporated,
so as to control movement of one or more vehicles (13, 21) passing over the guideway module,
and, wherein the guideway module is adapted for sliding motion of the one or more vehicles (13, 21) thereon.

11. The guideway module of claim 10, comprising any of
A. a guidance structure that inhibits motion of vehicles (13, 21) off the guideway;
and, optionally, wherein the guidance structure comprises one or more rails (12);
B. any of a rail (12), ledge, recess, or flange adapted for sliding motion of the one or more vehicles (13, 21) thereon;
C. one or more position sensors that monitor the position of vehicles (13, 21) moving thereon.

12. The guideway module of claim 10, wherein any of
A. the guideway module comprises a guidance structure that inhibits motion of vehicles (13, 21) off the guideway, wherein the guidance structure comprises one or more rails (12), and wherein the one or more propulsion coils (62, 64) are disposed for close proximity to the one or more magnets (33, 34) defining flux sources on the one or more vehicles (62, 64) passing over the module;
B. the propulsion coils are mounted on one or more printed circuit boards (64);
C. the guideway module comprises a guidance structure that inhibits motion of vehicles (13, 21) off the guideway and one or more power controllers that form part of the electronic power and control circuitry and that are selectively electrically coupled to one or more of the propulsion coils (62, 64), wherein the guidance structure comprises one or more rails (12); and, optionally, wherein the one or more power controllers are selectively electrically coupled to the propulsion coils (62, 64) of the associated module for independent control thereof;
D. the guideway module is arranged for interlocking coupling with one or more such modules.

13. The guideway module of claim 10, wherein the module defines any of a merge and a diverge (200), the guideway module altering a course of a vehicle (13, 21) passing thereover.

14. The guideway module of claim 13, comprising any of
A. a mechanically actuated switch (201) that alters a course of a vehicle (13, 21) passing thereon; and
B. a magnetically actuated switch (201) that alters a course of a vehicle (13, 21) passing thereon.

15. The guideway module of claim 13, comprising any of
A. a plurality of coreless propulsion coils (62, 64) disposed along a region in which the course of passing vehicles (13, 21) is altered; and
B. a plurality of coreless propulsion coils (62, 64) disposed along a corner, curve and/or branch defining the merge or diverge (200), respectively, so as to propel the vehicles (13, 21) therethrough.

16. The guideway module of claim 13, wherein the diverge region (200) comprises a switching member (201) that is disposed adjacent the switching region and that is selectively moveable relative to the guideway in order to change a magnetic force acting on the vehicle (13, 21) transverse to a direction of motion of the vehicle (13, 21) along the guideway.

17. The guideway module of claim 16, wherein any of
A. the switching region includes (i) an ingress (250), (ii) a first egress region (260L), and (iii) a second egress region (260R); and
B. the switching member has (i) a first configuration that is associated with motion of the vehicle (13, 21) from the ingress region (250) to the first egress region (260L), and (ii) a second configuration that is associated with motion of the vehicle (13, 21) from the ingress region (250) to the second egress region (260R), and, optionally, wherein the switching member is selectively moveable from the first configuration to the second configuration.

18. A wheel-less vehicle (13) configured for being used in a transport system without wheels or other rolling elements according to one of claims 1 to 9, the vehicle being adapted to be propelled along a guideway including a plurality of coreless propulsion coils (62, 64) and comprising:
a magnetic flux source (33, 34, 44); and
any of a rail (12), ledge, recess, or flange that comprises a sliding surface (32) that is adapted for sliding motion on a running surface (63; 63A) of the guideway;
wherein the wheel-less vehicle (13, 21) is further adapted to interact with the plurality of coreless propulsion coils (62, 64) of the guideway, the coreless propulsion coils (62, 64) being disposed along a region in which the vehicle (13, 21) is to be propelled, wherein the interaction between the vehicle (13, 21) and the coreless propulsion coil (62, 64) is controlled by an electronic power and control circuitry in the guideway that excites the one or more coreless propulsion coils (62, 64) independently of one or more other propulsion coils (63, 64) so as to propel the vehicle (13, 21), the vehicle (13, 21) being slidingly disposed on the running surface (63) of the guideway that supports the vehicle (13, 21) in close proximity to the coreless propulsion coils (62, 64), and wherein the vehicle (13, 21) has a low coefficient of friction with the running surface (63, 63A), the coefficient of friction being less than 0.2, wherein the vehicles (13, 21) comprise low friction components (32) disposed on a lower surface of the vehicle (13, 21), the low friction components having sliding surfaces that slide on the running surface (63, 63A) of the guideway.

## Patentansprüche

1. Transportsystem ohne Räder oder anderen rollenden Elementen, das Folgendes umfasst:
A. eine Führungsbahn, mit einer Vielzahl von kernlosen Antriebsspulen (62, 64), die entlang eines Bereichs angeordnet sind, in dem ein oder mehrere Fahrzeuge (13, 21) angetrieben werden sollen, und einer Lauffläche (63, 63A), die das eine oder die mehreren Fahrzeuge (13, 21) in unmittelbarer Nähe der kernlosen Antriebsspulen (62, 64) trägt;
B. ein oder mehrere räderlose Fahrzeuge (13, 21), die auf der Lauffläche (63, 63A) der Führungsbahn angeordnet sind, wobei jedes der Fahrzeuge eine Magnetflussquelle (33, 34, 44) enthält, wobei das eine oder die mehreren Fahrzeuge (13, 21) gleitend auf der Lauffläche (63, 63A) der Führungsbahn angeordnet sind, wobei das eine oder die mehreren Fahrzeuge (13, 21) einen niedrigen Reibungskoeffizienten mit der Lauffläche (63) haben, wobei der Reibungskoeffizient kleiner als 0.2 ist, wobei das eine oder die mehreren Fahrzeuge Komponenten (32) mit geringer Reibung umfassen, die auf einer unteren Oberfläche des einen oder der mehreren Fahrzeuge angeordnet sind, wobei die Komponenten mit geringer Reibung Gleitflächen aufweisen, die auf der Lauffläche der Führungsbahn gleiten; und
C. eine elektronische Leistungs- und Steuerschaltung, die die Antriebsspulen (62, 64) unabhängig voneinander erregt, um das eine oder die mehreren Fahrzeuge (13, 21) entlang des Führungsbahn anzutreiben.

2. Transportsystem nach Anspruch 1, wobei eines der folgenden Merkmale vorliegt:
B. das System umfasst einen oder mehrere Positionssensoren, die die Position von Fahrzeugen (13, 21) überwachen, die sich auf der Führungsbahn bewegen;
C. die Magnetflussquelle (33, 34, 44) von mindestens einem der Fahrzeuge (13, 21) umfasst einen oder mehrere Magnete (33, 34); und der eine oder die mehreren Magnete (33, 34) umfassen optional eine Halbach-Magnetanordnung (44);
D. eines oder mehrere der Fahrzeuge (13, 21) sind gleitend auf einer Fahrzeugkontaktfläche (63, 63A) einer Schiene, einer Leiste, einer Aussparung oder eines Flansches der Führungsbahn angeordnet.

3. Transportsystem nach Anspruch 1, wobei eines der folgenden Merkmale vorliegt:
A. eine Führungsstruktur auf der Führungsbahn oder dem einen oder den mehreren Fahrzeugen (13, 21) verhindert, dass sich das eine oder die mehreren Fahrzeuge (13, 21) von der Führungsbahn entfernen; und optional umfasst die Führungsstruktur eine oder mehrere Schienen (12), die auf der Führungsbahn angeordnet sind;
B. die Antriebsspulen (62, 64) sind auf einer oder mehreren gedruckten Leiterplatten (64) montiert; und optional umfasst die Führungsbahn eine Vielzahl von gekoppelten Modulen, und eines oder mehrere der Module umfassen eine oder mehrere der gedruckten Leiterplatten (64) mit darauf montierten Antriebsspulen (62, 64).

4. Transportsystem nach Anspruch 1, wobei die Führungsbahn eine Vielzahl von gekoppelten Modulen umfasst; und wobei optional:
eines oder mehrere der Module einen oder mehrere Leistungsregler umfassen, die Teil der elektronischen Leistungs- und Steuerschaltung sind und die selektiv elektrisch mit einer oder mehreren der Antriebsspulen (62, 64) gekoppelt sind; und ferner optional, wobei der eine oder die mehreren Leistungsregler selektiv elektrisch mit den Antriebsspulen (62, 64) des zugehörigen Moduls zur unabhängigen Steuerung derselben gekoppelt sind; und wobei eines oder mehrere der Module einen oder mehrere Mikroprozessoren und einen oder mehrere Schalter umfassen, die eine elektrische Kopplung zwischen der Leistungssteuerschaltung und den Antriebsspulen bereitstellen.

5. Transportsystem nach Anspruch 1, wobei die Führungsbahn mindestens einen Zusammenführungsbereich und einen Abzweigungsbereich (200) aufweist.

6. Transportsystem nach Anspruch 5, wobei mindestens einer der Zusammenführungs- und Abzweigungsbereiche (200) eine Vielzahl von kernlosen Antriebsspulen (62, 64) umfasst, die entlang eines Bereichs angeordnet sind, in dem die Bahn vorbeifahrender Fahrzeuge geändert wird.

7. Transportsystem nach Anspruch 5, wobei die Führungsbahn einen geraden Bereich zusammen mit einem Zusammenführungsbereich und/oder einem Abzweigungsbereich (220) umfasst.

8. Transportsystem nach Anspruch 7, wobei eines der folgenden Merkmale vorliegt:
A. der Zusammenführungsbereich oder der Abzweigungsbereich (200) beinhalten eine mechanisch betätigte Weiche (201), die die Bahn eines darauf fahrenden Fahrzeugs (13, 21) ändert;
B. der Zusammenführungsbereich oder der Abzweigungsbereich (200) beinhalten eine magnetisch betätigte Weiche (201), die die Bahn eines darauf fahrenden Fahrzeugs (13, 21) ändert;

9. Transportsystem nach Anspruch 5, wobei der Abzweigungsbereich ein Weichenelement (201) umfasst, das angrenzend an den Weichenbereich angeordnet ist und das selektiv relativ zu der Führungsbahn bewegt werden kann, um eine Magnetkraft zu ändern, die auf das Fahrzeug (13, 21) quer zu einer Bewegungsrichtung des Fahrzeugs (13, 21) entlang der Führungsbahn einwirkt; und, ferner optional, wobei:
A. der Weichenbereich (i) einen Eingang (250), (ii) einen ersten Ausgangsbereich (260L) und (iii) einen zweiten Ausgangsbereich (260R) umfasst,
B. das Weichenelement (201) (i) eine erste Konfiguration aufweist, die mit einer Bewegung des Fahrzeugs (13, 21) vom Eingangsbereich (250) zum ersten Ausgangsbereich (260L) assoziiert ist, und (ii) eine zweite Konfiguration aufweist, die mit einer Bewegung des Fahrzeugs (13, 21) vom Eingangsbereich (250) zum zweiten Ausgangsbereich (260R) assoziiert ist, und wobei optional das Weichenelement (201) wahlweise von der ersten Konfiguration zu der zweiten Konfiguration bewegbar ist.

10. Führungsbahnmodul, das für die Verwendung in einem Transportsystem ohne Räder oder anderen rollenden Elementen nach einem der Ansprüche 1 bis 9 konfiguriert ist, wobei das Führungsbahnmodul Folgendes umfasst:
A. eine oder mehrere kernlose Antriebsspulen (62, 64), die entlang eines Bereichs angeordnet sind, in dem ein oder mehrere Fahrzeuge (13, 21), die Magnetflussquellen (33, 34, 44) enthalten, angetrieben werden sollen;
B. eine Lauffläche (63), die eingerichtet ist, um das eine oder die mehreren räderlosen Fahrzeuge (13, 21) zu tragen, die gleitend auf der Lauffläche (63) in unmittelbarer Nähe der kernlosen Antriebsspulen (62, 64) angeordnet sind, wobei die Lauffläche (63) einen niedrigen Reibungskoeffizienten mit dem einen oder den mehreren Fahrzeugen (31, 21) aufweist, wobei der Reibungskoeffizient kleiner als 0.2 ist, wobei das eine oder die mehreren Fahrzeuge (13, 21) Komponenten (32) mit geringer Reibung umfassen, die auf einer unteren Oberfläche des einen oder der mehreren Fahrzeuge (13, 21) angeordnet sind, wobei die Komponenten mit geringer Reibung Gleitflächen aufweisen, die auf der Lauffläche (63) der Führungsbahn gleiten; und
C. eine elektronische Leistungs- und Steuerschaltung, die die eine oder mehrere Antriebsspulen (62, 64) unabhängig von einer oder mehreren anderen Antriebsspulen (62, 64) in
(a) dem Führungsbahnmodul oder
(b) einer Führungsschiene, in die dieses Führungsbahnmodul eingebaut ist, erregt,
um die Bewegung eines oder mehrerer Fahrzeuge (13, 21) zu steuern, die das Führungsbahnmodul passieren,
und, wobei das Führungsbahnmodul für eine gleitende Bewegung des einen oder der mehreren Fahrzeuge (13, 21) auf ihm eingerichtet ist.

11. Führungsbahnmodul nach Anspruch 10, umfassend eines der folgenden Elemente:
A. eine Führungsstruktur, die die Bewegung von Fahrzeugen (13, 21) außerhalb der Führungsbahn verhindert; und, optional, wobei die Führungsstruktur eine oder mehrere Schienen (12) umfasst;
B. eine Schiene (12), eine Leiste, eine Aussparung oder einen Flansch, die jeweils für eine gleitende Bewegung des oder der Fahrzeuge (13, 21) darauf eingerichtet sind;
C. ein oder mehrere Positionssensoren, die die Position der darauf fahrenden Fahrzeuge (13, 21) überwachen.

12. Führungsbahnmodul nach Anspruch 10, wobei eines der folgenden Merkmale vorliegt:
A. das Führungsbahnmodul umfasst eine Führungsstruktur, die eine Bewegung von Fahrzeugen (13, 21) außerhalb der Führungsbahn verhindert, wobei die Führungsstruktur eine oder mehrere Schienen (12) umfasst, und wobei die eine oder die mehreren Antriebsspulen (62, 64) in unmittelbarer Nähe zu dem einen oder den mehreren Magneten (33, 34) angeordnet sind, die Flussquellen auf dem einen oder den mehreren Fahrzeugen (62, 64) bilden, die über das Modul fahren;
B. die Antriebsspulen sind auf einer oder mehreren Leiterplatten (64) montiert;
C. das Führungsbahnmodul umfasst eine Führungsstruktur, die die Bewegung von Fahrzeugen (13, 21) außerhalb der Führungsbahn verhindert, und einen oder mehrere Leistungsregler, die Teil der elektronischen Leistungs- und Steuerschaltung sind und die selektiv elektrisch mit einer oder mehreren der Antriebsspulen (62, 64) gekoppelt sind, wobei die Führungsstruktur eine oder mehrere Schienen (12) umfasst; und wobei optional der eine oder die mehreren Leistungsregler selektiv elektrisch mit den Antriebsspulen (62, 64) des zugehörigen Moduls zu deren unabhängiger Steuerung gekoppelt sind;
D. das Führungsbahnmodul ist für eine formschlüssige Verbindung mit einem oder mehreren solcher Module eingerichtet.

13. Führungsbahnmodul nach Anspruch 10, wobei das Modul entweder eine Zusammenführung oder eine Abzweigung (200) definiert, wobei das Führungsbahnmodul die Bahn eines darüberfahrenden Fahrzeugs (13, 21) ändert.

14. Führungsbahnmodul nach Anspruch 13, umfassend eines der folgenden Elemente:
A. eine mechanisch betätigte Weiche (201), die die Bahn eines darauf fahrenden Fahrzeugs (13, 21) ändert; und
B. eine magnetisch betätigte Weiche (201), die die Bahn eines darauf fahrenden Fahrzeugs (13, 21) ändert.

15. Führungsbahnmodul nach Anspruch 13, umfassend eines der folgenden Elemente:
A. eine Vielzahl von kernlosen Antriebsspulen (62, 64), die entlang eines Bereichs angeordnet sind, in dem die Bahn vorbeifahrender Fahrzeuge (13, 21) geändert wird; und
B. eine Vielzahl von kernlosen Antriebsspulen (62, 64), die entlang einer Ecke, einer Kurve und/oder einer Verzweigung angeordnet sind, die die Zusammenführung bzw. die Abzweigung (200) definieren, um die Fahrzeuge (13, 21) durch diese hindurch anzutreiben.

16. Führungsbahnmodul nach Anspruch 13, wobei der Abzweigungsbereich (200) ein Weichenelement (201) umfasst, das angrenzend an den Weichenbereich angeordnet ist und das selektiv relativ zur Führungsbahn bewegt werden kann, um eine auf das Fahrzeug (13, 21) wirkende Magnetkraft quer zu einer Bewegungsrichtung des Fahrzeugs (13, 21) entlang der Führungsbahn zu ändern.

17. Führungsbahnmodul nach Anspruch 16, wobei eines der folgenden Merkmale vorliegt:
A. der Weichenbereich beinhaltet (i) einen Eingang (250), (ii) einen ersten Ausgangsbereich (260L) und (iii) einen zweiten Ausgangsbereich (260R); und
B. das Weichenelement (201) (i) weist eine erste Konfiguration auf, die mit einer Bewegung des Fahrzeugs (13, 21) vom Eingangsbereich (250) zum ersten Ausgangsbereich (260L) assoziiert ist, und (ii) weist eine zweite Konfiguration auf, die mit einer Bewegung des Fahrzeugs (13, 21) vom Eingangsbereich (250) zum zweiten Ausgangsbereich (260R) assoziiert ist, und wobei optional das Weichenelement (201) wahlweise von der ersten Konfiguration zu der zweiten Konfiguration bewegbar ist.

18. Räderloses Fahrzeug (13), das für die Verwendung in einem Transportsystem ohne Räder oder anderen rollenden Elementen nach einem der Ansprüche 1 bis 9 konfiguriert ist, wobei das Fahrzeug dafür eingerichtet ist, entlang einer Führungsbahn angetrieben zu werden, die eine Vielzahl von kernlosen Antriebsspulen (62, 64) beinhaltet, und wobei das Fahrzeug Folgendes umfasst:
eine Magnetflussquelle (33, 34, 44); und
eine Schiene (12), eine Leiste, eine Aussparung oder einen Flansch, die jeweils eine Gleitfläche (32) umfassen, die für eine Gleitbewegung auf einer Lauffläche (63; 63A) der Führungsbahn eingerichtet ist;
wobei das räderlose Fahrzeug (13, 21) ferner dazu eingerichtet ist, mit der Vielzahl von kernlosen Antriebsspulen (62, 64) der Führungsbahn zu interagieren, wobei die kernlosen Antriebsspulen (62, 64) entlang eines Bereichs angeordnet sind, in dem das Fahrzeug (13, 21) angetrieben werden soll, wobei die Interaktion zwischen dem Fahrzeug (13, 21) und der kernlosen Antriebsspule (62, 64) durch eine elektronische Leistungs- und Steuerschaltung in der Führungsbahn gesteuert wird, die die eine oder die mehreren kernlosen Antriebsspulen (62, 64) unabhängig von einer oder mehreren anderen Antriebsspulen (63, 64) erregt, um das Fahrzeug (13, 21) anzutreiben, wobei das Fahrzeug (13, 21) gleitend auf der Lauffläche (63) der Führungsbahn angeordnet ist, die das Fahrzeug (13, 21) in unmittelbarer Nähe zu den kernlosen Antriebsspulen (62, 64) trägt, und wobei das Fahrzeug (13, 21) einen niedrigen Reibungskoeffizienten mit der Lauffläche (63, 63A) aufweist, wobei der Reibungskoeffizient kleiner ist als 0.2 ist, wobei die Fahrzeuge (13, 21) reibungsarme Komponenten (32) aufweisen, die auf einer unteren Oberfläche des Fahrzeugs (13, 21) angeordnet sind, wobei die reibungsarmen Komponenten Gleitflächen aufweisen, die auf der Lauffläche (63, 63A) der Führungsbahn gleiten.

## Revendications

1. Système de transport sans roues ou autres éléments roulants, comprenant :
A. une voie de guidage incluant une pluralité de bobines de propulsion (62, 64) sans noyau disposées le long d'une région dans laquelle un ou plusieurs véhicules (13, 21) doivent être propulsés et une surface de roulement (63, 63A) supportant les un ou plusieurs véhicules (13, 21) à proximité immédiate des bobines de propulsion (62, 64) sans noyau ;
B. un ou plusieurs véhicules (13, 21) sans roues disposés sur la surface de roulement (63, 63A) de la voie de guidage, chacun des véhicules contenant une source de flux magnétique (33, 34, 44), les un ou plusieurs véhicules (13, 21) étant disposés de manière coulissante sur la surface de roulement (63, 63A) de la voie de guidage, les un ou plusieurs véhicules (13, 21) ayant un faible coefficient de friction avec la surface de roulement (63), le coefficient de friction étant inférieur à 0,2, dans lequel les un ou plusieurs véhicules comprennent des composants à faible friction (32) disposés sur une surface inférieure des un ou plusieurs véhicules, les composants à faible friction ayant des surfaces de glissement qui glissent sur la surface de roulement de la voie de guidage ; et
C. des circuits électroniques de puissance et de commande qui excitent les bobines de propulsion (62, 64) indépendamment de manière à propulser les un ou plusieurs véhicules (13, 21) le long de la voie de guidage.

2. Système de transport selon la revendication 1, dans lequel l'un des éléments suivants :
B. le système comprend un ou plusieurs capteurs de position qui surveillent la position des véhicules (13, 21) se déplaçant sur la voie de guidage ;
C. la source de flux magnétique (33, 34, 44) d'au moins un des véhicules (13, 21) comprend un ou plusieurs aimants (33, 34) ; et, éventuellement, les un ou plusieurs aimants (33, 34) comprennent un réseau d'aimants Halbach (44) ;
D. un ou plusieurs des véhicules (13, 21) sont disposés de manière coulissante sur une surface de contact de véhicule (63, 63A) de l'un quelconque d'un rail, d'un rebord, d'un évidement ou d'une bride de la voie de guidage.

3. Système de transport selon la revendication 1, dans lequel l'un des éléments suivants :
A. une structure de guidage sur l'un quelconque de la voie de guidage et des un ou plusieurs véhicules (13, 21) empêche les un ou plusieurs véhicules (13, 21) de sortir de la voie de guidage ; et, éventuellement, la structure de guidage comprend un ou plusieurs rails (12) qui sont disposés sur la voie de guidage ;
B. les bobines de propulsion (62, 64) sont montées sur une ou plusieurs cartes de circuit imprimé (64) ; et éventuellement, la voie de guidage comprend une pluralité de modules couplés et un ou plusieurs des modules incluent une ou plusieurs des cartes de circuit imprimé (64) avec des bobines de propulsion (62, 64) montées dessus.

4. Système de transport selon la revendication 1, dans lequel la voie de guidage comprend une pluralité de modules couplés ; et, éventuellement, dans lequel
un ou plusieurs des modules comprennent un ou plusieurs contrôleurs de puissance qui font partie du circuit électronique de puissance et de commande et qui sont sélectivement couplés électriquement à une ou plusieurs des bobines de propulsion (62, 64) ; et en outre, éventuellement, dans lequel les un ou plusieurs contrôleurs de puissance sont sélectivement couplés électriquement aux bobines de propulsion (62, 64) du module associé pour une commande indépendante de celles-ci ; et dans lequel un ou plusieurs des modules comprennent un ou plusieurs microprocesseurs et un ou plusieurs commutateurs qui fournissent un couplage électrique entre le circuit de commande de puissance et les bobines de propulsion.

5. Système de transport selon la revendication 1, dans lequel la voie de guidage comprend au moins une région de convergence et une région de divergence (200).

6. Système de transport selon la revendication 5, dans lequel au moins une desdites région de convergence et région de divergence (200) comprend une pluralité de bobines de propulsion (62, 64) sans noyau disposées le long d'une région dans laquelle la trajectoire des véhicules qui passent est modifiée.

7. Système de transport selon la revendication 5, la voie de guidage comprend une région de ligne droite, ainsi qu'au moins une région de convergence et une région de divergence (220).

8. Système de transport selon la revendication 7, dans lequel l'un des éléments suivants :
A. l'une quelconque de la région de convergence et de la région de divergence (200) comprend un commutateur actionné mécaniquement (201) qui modifie une trajectoire d'un véhicule (13, 21) passant sur celle-ci ;
B. l'une quelconque de la région de convergence et de la région de divergence (200) comprend un commutateur actionné magnétiquement (201) qui modifie une trajectoire d'un véhicule (13, 21) passant sur celle-ci.

9. Système de transport selon la revendication 5, dans lequel la région de divergence comprend un élément de commutation (201) qui est disposé de manière adjacente à la région de commutation et qui est sélectivement mobile par rapport à la voie de guidage afin de modifier une force magnétique agissant sur le véhicule (13, 21) transversalement à une direction de mouvement du véhicule (13, 21) le long de la voie de guidage ; et, en outre, éventuellement, dans lequel
A. la région de commutation inclut (i) une entrée (250), (ii) une première région de sortie (260L), et (iii) une deuxième région de sortie (260R),
B. l'élément de commutation (201) a (i) une première configuration qui est associée au mouvement du véhicule (13, 21) de la région d'entrée (250) à la première région de sortie (260L), et (ii) une deuxième configuration qui est associée au mouvement du véhicule (13, 21) de la région d'entrée (250) à la deuxième région de sortie (260R), et, éventuellement, dans lequel l'élément de commutation (201) est sélectivement mobile de la première configuration à la deuxième configuration.

10. Module de guidage configuré pour être utilisé dans un système de transport sans roues ou autres éléments roulants selon l'une des revendications 1 à 9, le module de guidage comprenant
A. une ou plusieurs bobines de propulsion (62, 64) sans noyau disposées le long d'une région dans laquelle un ou plusieurs véhicules (13, 21) qui comprennent des sources de flux magnétique (33, 34, 44) doivent être propulsés ;
B. une surface de roulement (63) adaptée pour supporter les un ou plusieurs véhicules (13, 21) sans roues disposés de manière coulissante sur la surface de roulement (63) à proximité immédiate des bobines de propulsion (62, 64) sans noyau, la surface de roulement (63) ayant un faible coefficient de friction avec les un ou plusieurs véhicules (31, 21), le coefficient de friction étant inférieur à 0,2, dans lequel les un ou plusieurs véhicules (13, 21) comprennent des composants à faible friction (32) disposés sur une surface inférieure des un ou plusieurs véhicules (13, 21), les composants à faible friction ayant des surfaces de glissement qui glissent sur la surface de roulement (63) de la voie de guidage ; et
C. des circuits électroniques de puissance et de commande qui excitent les une ou plusieurs bobines de propulsion (62, 64) indépendamment d'une ou de plusieurs autres bobines de propulsion (62, 64) dans l'un quelconque des suivants
(a) le module de guidage, et
(b) un rail de guidage dans lequel ce module de guidage est incorporé,
de manière à commander le mouvement d'un ou plusieurs véhicules (13, 21) passant sur le module de guidage,
et, dans lequel le module de guidage est adapté pour un mouvement de glissement d'un ou plusieurs véhicules (13, 21) sur celui-ci.

11. Module de guidage selon la revendication 10, comprenant l'un quelconque des suivants
A. une structure de guidage qui empêche le mouvement des véhicules (13, 21) hors de la voie de guidage ; et, éventuellement, dans laquelle la structure de guidage comprend un ou plusieurs rails (12) ;
B. l'un quelconque des rails (12), rebords, évidements ou brides adaptés au mouvement de glissement des un ou plusieurs véhicules (13, 21) sur ceux-ci ;
C. un ou plusieurs capteurs de position qui surveillent la position des véhicules (13, 21) qui s'y déplacent.

12. Module de guidage selon la revendication 10, dans lequel l'un quelconque des suivants
A. le module de guidage comprend une structure de guidage qui empêche le mouvement des véhicules (13, 21) hors de la voie de guidage, dans lequel la structure de guidage comprend un ou plusieurs rails (12), et dans lequel les une ou plusieurs bobines de propulsion (62, 64) sont disposées à proximité immédiate des un ou plusieurs aimants (33, 34) définissant des sources de flux sur les un ou plusieurs véhicules (62, 64) passant sur le module ;
B. les bobines de propulsion sont montées sur une ou plusieurs cartes de circuit imprimé (64) ;
C. le module de guidage comprend une structure de guidage qui empêche le mouvement des véhicules (13, 21) en dehors de la voie de guidage et un ou plusieurs contrôleurs de puissance qui font partie du circuit électronique de puissance et de commande et qui sont sélectivement couplés électriquement à une ou plusieurs des bobines de propulsion (62, 64), dans lequel la structure de guidage comprend un ou plusieurs rails (12) ; et, éventuellement, dans lequel les un ou plusieurs contrôleurs de puissance sont sélectivement couplés électriquement aux bobines de propulsion (62, 64) du module associé pour une commande indépendante de celles-ci ;
D. le module de guidage est agencé pour s'accoupler par verrouillage avec un ou plusieurs de ces modules.

13. Module de guidage selon la revendication 10, dans lequel le module définit l'un quelconque d'une convergence et d'une divergence (200), le module de guidage modifiant une trajectoire d'un véhicule (13, 21) passant par là.

14. Module de guidage selon la revendication 13, comprenant l'un quelconque des suivants
A. un commutateur actionné mécaniquement (201) qui modifie la trajectoire d'un véhicule (13, 21) passant sur celui-ci ; et
B. un commutateur actionné magnétiquement (201) qui modifie la trajectoire d'un véhicule (13, 21) passant sur celui-ci.

15. Module de guidage selon la revendication 13, comprenant l'un quelconque des suivants
A. une pluralité de bobines de propulsion (62, 64) sans noyau disposées le long d'une région dans laquelle la trajectoire des véhicules (13, 21) qui passent est modifiée ; et
B. une pluralité de bobines de propulsion (62, 64) sans noyau disposées le long d'un coin, d'une courbe et/ou d'une branche définissant la convergence ou la divergence (200), respectivement, de manière à propulser les véhicules (13, 21) à travers celle-ci.

16. Module de guidage selon la revendication 13, dans lequel la région de divergence (200) comprend un élément de commutation (201) qui est disposé de manière adjacente à la région de commutation et qui est sélectivement mobile par rapport à la voie de guidage afin de modifier une force magnétique agissant sur le véhicule (13, 21) transversalement à une direction de mouvement du véhicule (13, 21) le long de la voie de guidage.

17. Module de guidage selon la revendication 16, dans lequel l'un quelconque des suivants
A. la région de commutation inclut (i) une entrée (250), (ii) une première région de sortie (260L), et (iii) une deuxième région de sortie (260R) ; et
B. l'élément de commutation a (i) une première configuration qui est associée au mouvement du véhicule (13, 21) de la région d'entrée (250) à la première région de sortie (260L), et (ii) une deuxième configuration qui est associée au mouvement du véhicule (13, 21) de la région d'entrée (250) à la deuxième région de sortie (260R), et, éventuellement, dans lequel l'élément de commutation est sélectivement mobile de la première configuration à la deuxième configuration.

18. Véhicule sans roues (13) configuré pour être utilisé dans un système de transport sans roues ou autres éléments roulants selon l'une des revendications 1 à 9, le véhicule étant adapté pour être propulsé le long d'une voie de guidage incluant une pluralité de bobines de propulsion (62, 64) sans noyau et comprenant :
une source de flux magnétique (33, 34, 44) ; et
l'un quelconque d'un rail (12), d'un rebord, d'un évidement ou d'une bride qui comprend une surface de glissement (32) qui est adaptée pour un mouvement de glissement sur une surface de roulement (63 ; 63A) de la voie de guidage ;
dans lequel le véhicule (13, 21) sans roues est en outre adapté pour interagir avec la pluralité de bobines de propulsion (62, 64) sans noyau de la voie de guidage, les bobines de propulsion (62, 64) sans noyau étant disposées le long d'une région dans laquelle le véhicule (13, 21) doit être propulsé, dans lequel l'interaction entre le véhicule (13, 21) et la bobine de propulsion (62, 64) sans noyau est commandée par un circuit électronique de puissance et de commande dans la voie de guidage qui excite les une ou plusieurs bobines de propulsion (62, 64) sans noyau indépendamment d'une ou plusieurs autres bobines de propulsion (63, 64) de manière à propulser le véhicule (13, 21), le véhicule (13, 21) étant disposé de manière coulissante sur la surface de roulement (63) de la voie de guidage qui supporte le véhicule (13, 21) à proximité immédiate des bobines de propulsion (62, 64) sans noyau, et dans lequel le véhicule (13, 21) a un faible coefficient de friction avec la surface de roulement (63, 63A), le coefficient de friction étant inférieur à 0,2, dans lequel les véhicules (13, 21) comprennent des composants à faible friction (32) disposés sur une surface inférieure du véhicule (13, 21), les composants à faible friction ayant des surfaces de glissement qui glissent sur la surface de roulement (63, 63A) de la voie de guidage.
